# EUROPEAN PATENT APPLICATION

(11) **EP 1 014 751 A2**
(43) Date of publication of application: **28.06.2000**
(21) Application number: 99310225.0
(22) Date of filing: 17.12.1999
(51) Int. Cl.: H04Q 11/04

(54) **A wireless communication system in which a base station controller routes packet data between mobile units and a packet data network**

(30) Priority: 23.12.1998 US 220218
(71) Applicant: NORTEL NETWORKS CORPORATION, Montreal, Quebec H2Y 3Y4 (CA)
(72) Inventor: Mizell, Jerry, Plano, Texas 75024 (US); Lauson, David, Allen, Texas 75013 (US)
(74) Representative: Maury, Richard Philip

(57) **Abstract**

A wireless communication system constructed according to the present invention includes at least one base station controller (BSC) that couples to a packet data network to service packet data communications between the packet data network and a mobile unit. The BSC is serviced by a mobile switching center (MSC) and services a plurality of base stations. The BSC includes circuitry that perform necessary interfacing functions to service the packet data communication requirements of the mobile unit. The mobile unit requests the wireless communication system to initiate this operation via a request made to a servicing base station. The base station forwards the request to the BSC which interacts with the MSC to initiate the packet data session. The BSC allocates a digital signal processor (DSP), processor and packet data network interface to service the packet data session for the mobile unit. The BSC thereafter sets up and services the packet data session through its connection to the servicing base station and its connection to the packet data network. Once this connection is established, the BSC continues to service the packet data session until it is terminated or until the mobile unit roams into a cell/sector serviced by another base station. Upon roaming of the mobile unit, operation will be altered. If the mobile unit roams to another cell or sector of a base station serviced by the same BSC, the path is only altered to include the newly servicing base station. However, if the mobile unit roams to a cell or sector serviced by another base station, the BSC must initiate mobility operations that will forward packet data communications to the newly servicing BSC for delivery to the mobile unit. By forwarding the packet data, the mobile unit maintains the same packet data network address.

## Description

### BACKGROUND

### 1. Technical Field

The present invention relates generally to wireless communication systems; and more particularly to a wireless communication system having at least one base station controller that couples to a packet data network and that routes packet data between the packet data network and a plurality of roaming mobile units.

### 2. Related Art

Wireless communication systems are well known in the art to facilitate communication between a wireless mobile unit and other wireless mobile units as well as between wireless mobile units and users of wired units, such as those attached to the public switched telephone network. Wireless communication systems operate according to communication protocols within allocated frequency bands and on particular RF channels contained within the frequency bands. Frequency bands currently in use in North America and around the world for wireless communications include the 800 MHz (cellular) band and the 1900 MHz (PCS) band among others.

Various standardized communication protocols have been developed for wireless communication systems. These standardized communication protocols include, for example, the Advanced Mobile Phone Service (AMPS) standards, the Global Standards for Mobility (GSM), the Code Division Multiple Access (CDMA) and the Time Division Multiple Access (TDMA) standard. These standards support interoperability of equipment manufactured by differing vendors.

Wireless communication systems are generally constructed according to a hierarchy in which mobile switching centers (MSCs) (or mobile telephone exchanges (MTXs)) reside atop the hierarchy. The MSCs couple to the Public Switched Telephone Network (PSTN) and also typically couple to Packet Data Networks (PDNs) such as the Internet via an Interworking Function. In this hierarchy, each MSC (or MTX) services a plurality of base station controllers (BSCs), each of which services a plurality of base stations. The base stations establish wireless links with serviced mobile units. In this hierarchy, all calls (voice or packet data communications) are routed through the MSC (MTX).

Wireless communication systems were initially developed to support voice communications. However, with the advances in digital computers and data networking technologies, and with the need to provide wireless data services in mobile environment, it has become advantageous to develop wireless communication systems that also support data communications between mobile data terminals (e.g., portable computers) and coupled packet data networks. Some wireless data communication networks, such as the Cellular Digital Packet Data (CDPD) network, have been developed specifically to service packet data communications using existing 30 kHz analog RF channels. However, CDPD protocol has been developed as a stand-alone infrastructure independent of the existing wireless voice communication networks. Creating a completely separate network for data communication requires great redundancy in resources on the network side and on the subscriber side. The voice/data user has to subscribe to two different services, two different networks, and two sets of equipment. Thus, it is advantageous to retrofit existing wireless communication systems that operate according to a standardized air interface protocol (e.g., TDMA, CDMA, GSM, etc.) to support packet data communications and provide both services using a single mobile unit.

Retrofitting existing wireless communication systems to support both voice and packet data communications is difficult, especially considering the different networking protocols and different traffic patterns for packet data communication as compared to voice communications. While voice communications typically require a substantially consistent bandwidth for their duration, packet data communications are bursty and tend to require significant bandwidth over short periods of time. Nonetheless both types of communications require a dedicated communication path through the MSC. The increased loading levels required to service the packet data communications often overload the MSCs.

For those systems that service packet data communications, difficulties arise when a mobile unit currently being serviced in a packet data session roams to the service area of another MSC. In such case, the mobile unit must maintain the packet data (e.g., Internet Protocol) address initially established. However, the packet data address remains with the MSC. Thus, the IWF or the MSC must reroute the packet data to the mobile unit using a mobility operation, e.g., mobile IP, or the session must be terminated. In either case, the MSC or IWF will be eventually become overloaded in supporting these operations is ongoing.

Thus, there exists a need in the art for a wireless communication systems that efficiently allocates resources to support packet data communications, that compensates for expansion and contraction of packet data traffic loading, that seamlessly handles mobility of serviced units and that may be easily deployed within existing wireless communication system that supports voice communications.

### SUMMARY OF THE INVENTION

Thus, to overcome the shortcomings of the prior systems, among other shortcomings, a wireless communication system constructed according to the present invention includes at least one base station controller (BSC) that couples to a packet data network to service packet data communications between the packet data network and a mobile unit. The BSC is serviced by a mobile switching center (MSC) and services a plurality of base stations. The BSC includes circuitry that perform necessary interfacing functions to service the packet data communication requirements of the mobile unit.

In a typical operation, the mobile unit desires to initiate a packet data session with a packet data computer coupled to the packet data network. In initiating the operation, the mobile unit requests the wireless communication system to initiate this operation via a request made to a servicing base station. The base station forwards the request to the BSC which interacts with the MSC to initiate the packet data session. The BSC allocates a digital signal processor (DSP), processor and packet data network interface to service the packet data session for the mobile unit. The BSC thereafter sets up and services the packet data session through its connection to the servicing base station and its connection to the packet data network. Once this connection is established, the BSC continues to service the packet data session until it is terminated or until the mobile unit roams into a cell/sector serviced by another base station.

Upon roaming of the mobile unit, operation will be altered. If the mobile unit roams to another cell or sector of a base station serviced by the same BSC, the path is only altered to include the newly servicing base station. However, if the mobile unit roams to a cell or sector serviced by another base station, the BSC must initiate mobility operations that will forward packet data communications to the newly servicing BSC for delivery to the mobile unit. By forwarding the packet data, the mobile unit maintains the same packet data network address. A similar operation is performed when the mobile unit roams into a cell or sector served by a base station of another system (another MSC). In such case the packet data is forwarded to the mobile unit at its then current location. However, in both cases, the mobile unit will transmit packet data to the packet data network via its currently serving BSC.

Moreover, other aspects of the present invention will become apparent with further reference to the drawings and specification which follow.

### BRIEF DESCRIPTION OF THE DRAWINGS

A better understanding of the present invention can be obtained when the following detailed description of the preferred embodiment is considered in conjunction with the following drawings, in which:
FIG. 1 is a system diagram illustrating generally a wireless communication system constructed according to the present invention in which a plurality of base station controllers service packet data communications via a direct connection to a packet data network;
FIG. 2 is a block diagram illustrating a base station controller constructed according to the present invention;
FIG. 3 is a system diagram illustrating generally the routing paths of packet data communications supported by a wireless communication system constructed according to the present invention as a mobile unit roams within the wireless communication system to a neighboring wireless communication system;
FIG. 4 is a logic diagram illustrating operation according to the present invention in servicing packet data communications for a mobile unit; and
FIG. 5 is a logic diagram illustrating operation of the wireless communication of FIG. 4 during mobility operations.

### DETAILED DESCRIPTION OF THE DRAWINGS

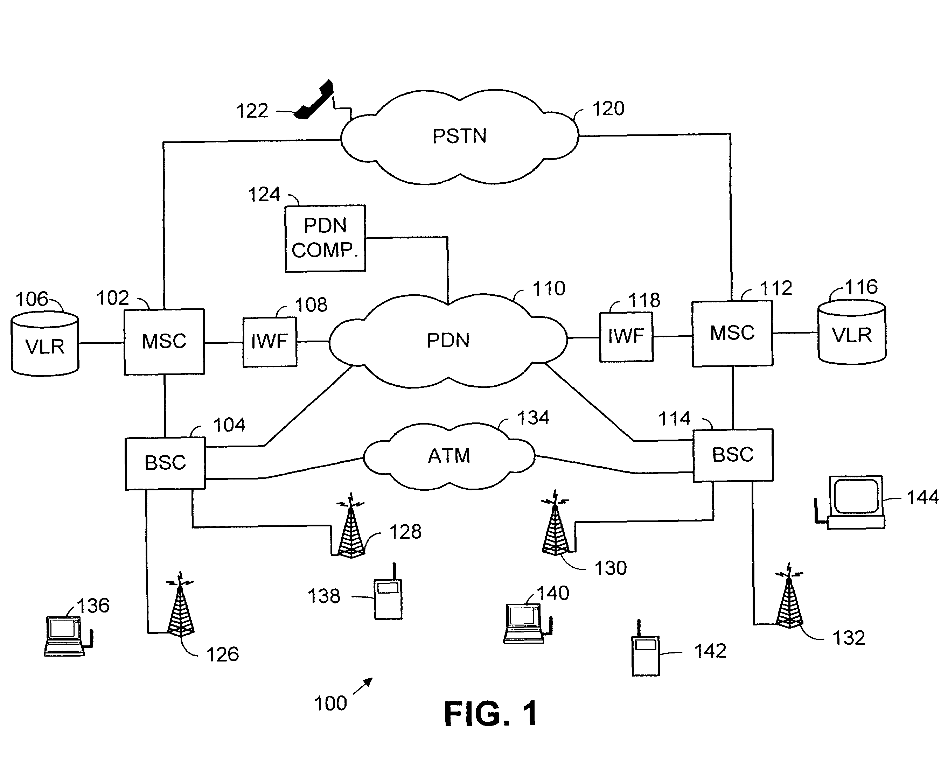

FIG. 1 is a system diagram illustrating generally a wireless communication system 100 constructed according to the present invention in which a plurality of base station controllers service packet data communications direct connections to a packet data network. The wireless communication system 100 includes mobile switching centers (MSCs) 102 and 112. Coupled to each MSC 102 and 112 is at least one base station controller (BSC). BSC 104 couples to MSC 102 while BSC 114 is couple to MSC 112. However, in a typical installation, more than one BSC would couple to each of the MSCs 102 and 112. Finally, at least one base station couples to each BSC. As shown, base stations 126 and 128 couple to BSC 104 and provide wireless service within respective cells/sectors while base stations 130 and 132 couple to BSC 112 and provide wireless service within respective cells/sectors. The construction of cellular based wireless communication systems is generally known. Thus, the structure of such cellular wireless communication systems will not be discussed other than to explain the teachings of the present invention.

Each of the MSCs 102 and 112 is serviced by a visitor location register (VLR), 106 and 116, respectively. Further, each of the MSCs 102 and 116 couples to a home location register (HLR) (not shown), which stores subscriber information. The construction of VLRs and HLRs is also generally known. Thus, the operation of the VLRs and HLRs will not be discussed herein except as it applies to operations according to the present invention.

Each of the MSCs 102 and 112 also couples to the public switched telephone network (PSTN) 120. Terminal 122 couples to the PSTN 120 and may access the wireless communication system 100 thereby to communicate with a serviced mobile unit. The MSCs 102 and 112 also couple to a packet data network (PDN) 110 (e.g., the Internet that operates according to the Internet Protocol) via Interworking Functions (IWFs) 108 and 118, respectively.

As is known, most wireless communication systems support circuit switching operations, as opposed to the packet switching operations supported by the PDN 110. This difference in the manner in which the differing systems operate necessitates the IWFs 108 and 118 which service the intermediate operations there between. Also attached to the PDN 110 is a PDN enabled computer 124, an example of such PDN enabled computer 124 being a web based server.

An Asynchronous Transfer Mode (ATM) network 134 also couples to the BSCs 104 and 114. The ATM network 134 supports inter-BSC communication and traffic operations. The ATM network 134 may be fully compliant with ATM standards or may operate in a proprietary fashion to service the BSCs 104 and 114. In another embodiment, the ATM network may operate according to a different operating methodology while still retaining the function of serving as a semi-private or private network intercoupling the base stations 104 and 114.

The wireless communication system 100 supports packet data communications for mobile units operating within its service coverage area. For example, laptop computers 136 and 140 and fixed wireless loop desktop computer 144 establish wireless links with respective base stations that are packet switched. Further, PD enabled handsets 138 and 142 support both voice communications and packet data communications. Each of these PD enabled devices may support TCP/IP communications or other standardized PD protocols.

The wireless links established between the base stations and the mobile units (e.g., base station 126 to laptop computer 136) form a portion of a communication path over which the packet data communications are routed. However, as compared to prior systems, the packet data communications are routed between the PD network 110 and a supported mobile unit by one of the BSCs 104 or 114. Thus, the MSCs 102 or 112 are not required to route the PD communications between the PDN 110 and the supported mobile units.

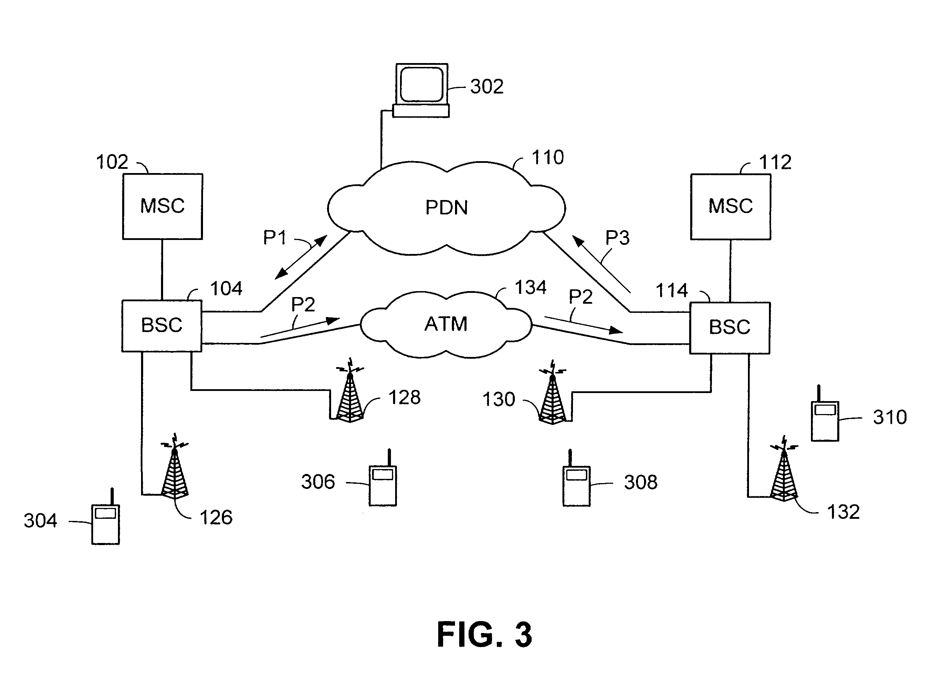

Additionally, according to the present invention, mobility management for packet data sessions is handled primarily by the BSCs 104 and 114 with some MSC interaction. Because the BSCs 104 and 114 couple directly to the PDN 110 they enable mobility operations, such as Mobile IP or other similar operations, to service a mobile unit as it roams from the service area of one BSC 104 to another BSC 114. In such case, the BSC 104 forwards received packet data communications to the currently serving BSC 114 via the ATM network 134 (or the PDN 110) using the supported mobility operations. The mobility operations support provided by the BSCs 104 and 114 further offloads the MSCs 102 and 112 as well as the IWFs 108 and 118. An example of such mobility operation will be discussed with reference to FIG. 3.

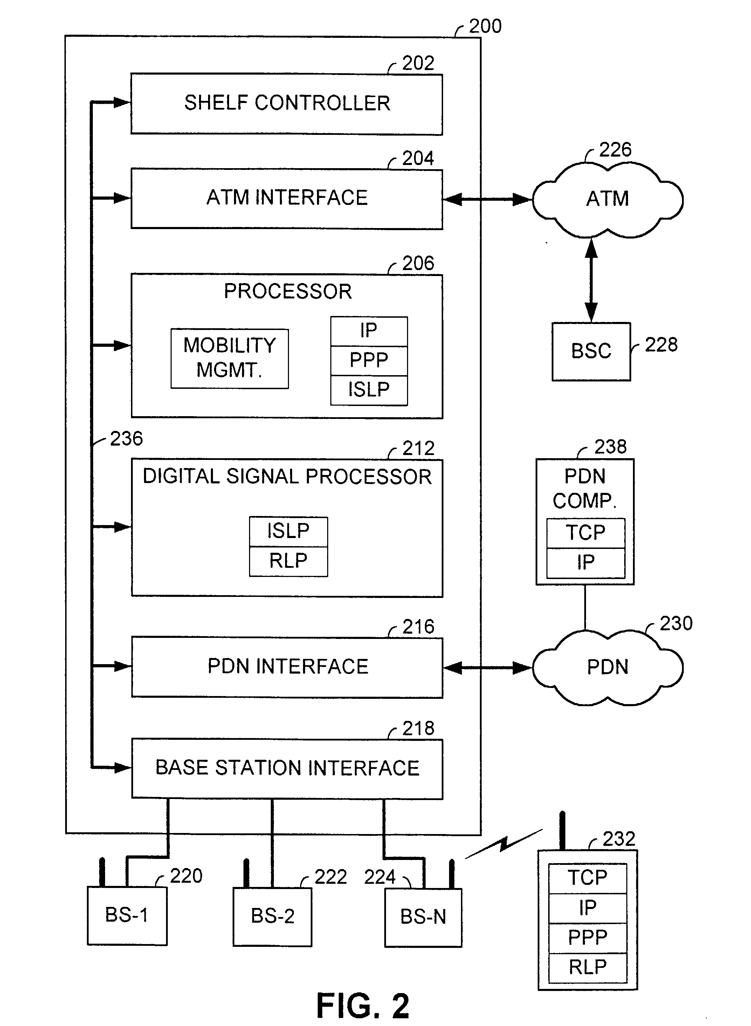

FIG. 2 is a block diagram illustrating a base station controller 200 constructed according to the present invention. The BSC 200 includes a shelf controller 202, an ATM interface 204, a processor 206, a digital signal processor (DSP) 212, a PDN interface 216 and a base station interface 218. The shelf controller 202 controls the operations of the other components of the BSC 200 and manages communications between the other components via a back shelf 236, the back shelf 236 supporting ATM operations in the present embodiment but that may support proprietary operations in another embodiment. These components may be constructed as cards that may be inserted into a BSC shell that includes the back shelf 236. With such a construction, the BSC 200 may include multiple shelf controllers, multiple processors, multiple DSPs and multiple base station interfaces to service the particular loading level of the BSC 200.

The processor 206 performs various processing functions that include conventional BSC functions and operations according to the present invention for servicing packet data communication sessions. The ATM interface 204 interfaces the BSC 200 to an ATM network 226, such ATM network 226 coupling the BSC 200 to other BSCs, e.g., BSC 228. As will be further described with reference to FIGs. 3, 4 and 5, packet data communications are routed from BSC to BSC as required to service a roaming mobile unit. The PDN interface 216 interfaces the BSC 200 to the PDN 230 and may be an Ethernet card or another device which interfaces the back plane 236 to the PDN 230.

The base station interface 218 interfaces the BSC 200 to a plurality of base stations 220, 222 and 224 serviced by the BSC 200. Each of these base stations 220, 222 and 224 provides wireless coverage within a respective cell/sectors. In providing this wireless coverage, the base stations 220, 222 and 224 establish wireless links with serviced mobile units. For example, base station 224 supports a wireless link with mobile unit 232, the mobile unit 232 actively engaged in a packet data session that is being serviced by the BSC 234. The base stations also service voice communications.

The PDN computer 238, BSC 200 and mobile unit 232 operate according to Industry Standard Organization (ISO) operating protocols during packet data sessions. According to such standard operating protocols (in a CDMA example), the mobile unit supports the Transmission Control Protocol (TCP) layer, the Internet Protocol (IP) layer, the Point-to-Point Protocol (PPP) layer and the Radio Link Protocol (RLP). In systems operating under the TDMA and GSM standards, the RLP layer and PPP layer are replaced by the General Packet Radio Services (GPRS) layer and the Link Layer Control (LLC) layer, respectively.

Further, under the ISO standards, the DSP 212 supports the RLP layer and the InterSystem Link Protocol (ISLP) layer while the processor 206 supports the ISLP layer, the PPP layer and the IP layer. Thus, in such case, the DSP 212 takes the place of a selector bank subsystem of a conventional BSC operating according to the CDMA standards. Further, the processor 206 performs operations previously performed by the IWF 108 or 118.

According to the construction of the BSC 200 and the operations of the various components contained therein, a packet data communication path is established from the mobile unit 232, through the base station 224, through the base station interface 218 via the back plane 236 to the DSP 212, through the DSP 212 to the processor 206 via the back plane 206, through the processor 206 to the PDN interface 216 via the back plane 236 and to the PDN computer 238 via the PDN 230. This packet data communication path is serviced until terminated or until the mobile unit roams to the service area of another base station.

When the mobile unit 232 roams to another base station, e.g., base station 222, the new base station 222 now services the wireless link with the mobile unit 232. Other portions of the path remain unchanged and are not altered in such roaming example. However, if the mobile unit 232 roams into the service area of another BSC, e.g., BSC 228, inter BSC mobility operations must be established to continue servicing the packet data session. In such case, the processor 206 (via the ATM interface 204 and back plane 236) continues to service the receipt of packet data communication. However, a DSP of the other BSC 228 supports the ISLP layer and RLP layer of the communication because the physical link is established by the BSC 228 via a coupled base station. Thus, the other BSC 228 assumes these protocol layer support functions.

However, according to the present invention, the BSC 200 maintains a PDN address (e.g., IP address) for the mobile unit and continues to receive packet data for the mobile unit at the PDN address. Now, however, the BSC 200 forwards the packet data to the BSC 228 currently serving the mobile unit by encapsulating the packet data and sending it to the BSC 228 via the ATM 226 (or via the PDN 230 in another embodiment). For efficiency in operation, the BSC 228 services packet data communications placed onto the PDN 230 by the mobile unit 232 after it begins servicing the mobile unit 232.

FIG. 3 is a system diagram illustrating generally the routing paths of packet data communications supported by a wireless communication system constructed according to the present invention as a mobile unit roams within the wireless communication system to a neighboring wireless communication system. Many of the components illustrated in FIG. 3 are the same as those illustrated in, and described with reference to FIG. 1. These components have retained their numbering convention and will not be described herein except as their operation relates to the present invention in the current example and was not previously described. In an operation according to the present invention, a mobile unit initiates a packet data session with the wireless communication system while at position 304. This packet data session is continued as the mobile unit roams to positions successively from position 304, to position 306, to position 308 and finally to position 310.

When the mobile unit establishes the packet data session while located at position 304, the mobile unit makes a request to the base station 126 to establish the session, the base station 126 relays the request to BSC 104 which sets up the packet data session via interaction with MSC 102 and by allocating an IP address to the mobile unit, such IP address associated with the BSC 104. With this packet data session established, the mobile unit 304 interacts with PDN computer 302 via path P1 from the PDN 110 to BSC 104 and via a path from BSC 104 to the mobile unit 304 via base station 126. Such a path was described with reference to FIG. 2.

When the mobile unit roams to position 306, it is now serviced by base station 128 but is still serviced by BSC 104. Thus, while the BSC 104 must establish a new path from the base station controller contained therein to the mobile unit 306, no other resources within the BSC 104 must be altered and the PDN session continues to be serviced along path P1 between the BSC 104 and the PDN 110.

When the mobile unit roams to position 308, however, it is serviced by BSC 114 and MSC 112 instead of BSC 104 and MSC 102. Thus, mobility operations must be performed by the processor contained within the BSC 104 to accommodate the new position of the mobile unit. These mobility operations are be accomplished in a similar manner as Mobile IP. However, according to the present invention, operations will differ, depending upon the particular embodiment.

Mobile IP is an enhancement to IP which allows a computer to roam freely on the PDN 110 while still maintaining the same IP address. This protocol allows transparent routing of IP datagrams to mobile nodes in the Internet. Each mobile node is always identified by its home address, regardless of its current point of attachment to the Internet. Mobile IP comes up because of the need of a mobile computer (laptop) to change its point of attachment to the internet.

The problem is that when a message is sent over the Internet, the router tables select which path to follow based not on the whole IP address, but on the network number of the IP address. Then it follows that when a host changes its point of attachment to the Internet, the messages would still be arriving at the original destination. The solution given by mobile IP consists of creating a so-called care-of-address whenever a host changes its point of attachment to the web. So basically messages that arrive at the original home-address are redirected (tunneled) to the care-of-address.

According to the present invention, when the mobile unit that was previously serviced by the BSC 104 roams to the service area of BSC 114, the BSCs 104 and 114 together service the roaming mobile unit in its packet data session. While path P1 serviced the packet data session with the mobile unit when it was in positions 304 and 306, when the mobile unit roams to the service area of BSC 114, it must be serviced by a new data path. In order to allow the mobile unit to keep its IP address (or other PDN address it has previously established at BSC 104), the BSC 104 continues to service incoming packet data communications for the mobile unit on path P1. However, because it no longer services the mobile unit, it must forward the packet data communications to BSC 114 via the ATM 134 on path P2.

With the BSC 114 now servicing the packet data session for the mobile unit when the mobile unit is in either position 308 or position 310, the outgoing packet data communications are routed along path P3 from the BSC 114 to the PDN 110. All of these routing and mobility operations, of course, are coordinated with the MSCs 102 and 112 for resource allocation, VLR updates and HLR updates.

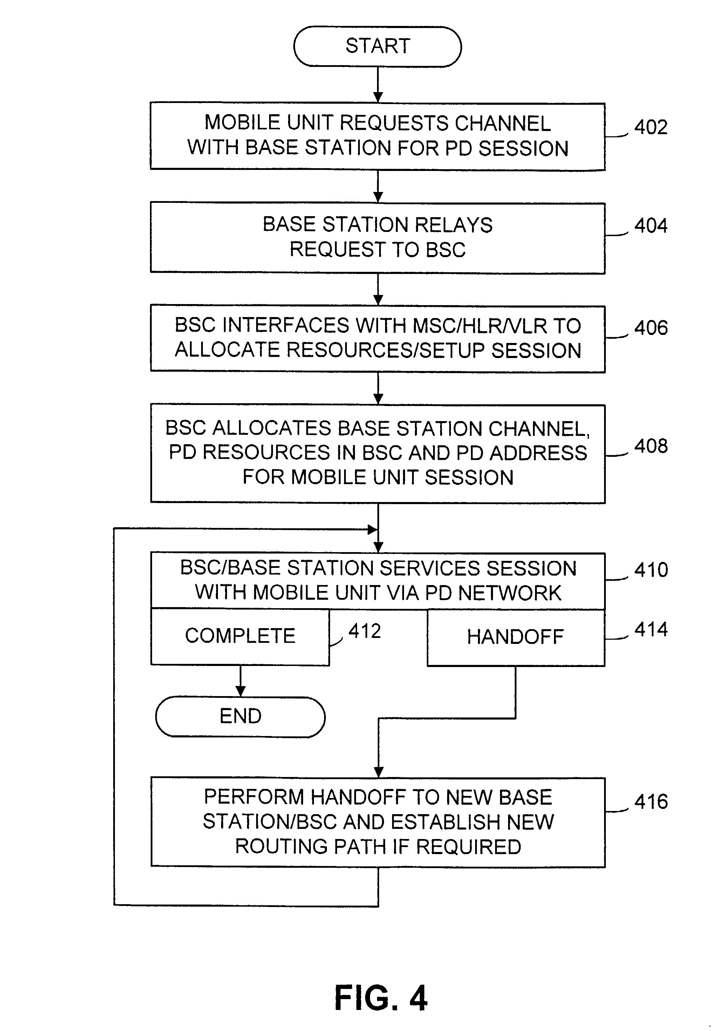

FIG. 4 is a logic diagram illustrating operation according to the present invention in servicing packet data communications. Operation commences at step 402 wherein a mobile unit makes a request to a servicing base station for a packet data session. At step 404 the base station relays the request to the BSC. The BSC then interfaces with its servicing MSC/HLR/VLR at step 406 in order to determine whether it should allocate a channel to the mobile unit and, if so, what resources should be allocated to setup the packet data session. From step 406, operation proceeds to step 408 where the BSC allocates a base station channel, allocates its packet data servicing resources, a packet data address for the mobile unit and other required resources to service the packet data session.

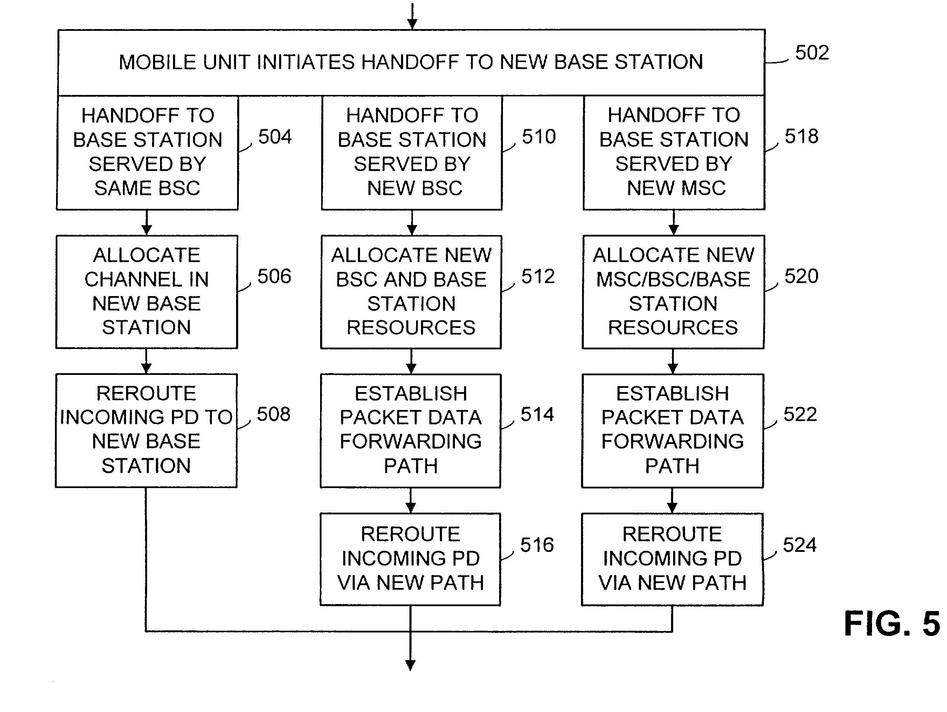

From step 408, once the resources have been allocated and setup, the BSC/base station services the packet data session for the mobile unit and continues to do so until the packet data session is complete or a handoff to another base station is required. When the packet data session is complete at step 412, the allocated resources are freed and operation ends. Further, when a handoff occurs at step 414, operation according to the present invention is invoked at step 416 to continue servicing the packet data session. Operation of step 416 will be described further with reference to FIG. 5. From step 416, operation returns to step 410 wherein the system continues to service the packet data session.

FIG. 5 is a logic diagram illustrating operation of the wireless communication of FIG. 4 during mobility operations, in particular operation of step 416 of FIG. 4. Three separate handoff operations may be invoked from step 502. In a first handoff situation, the mobile unit is handed off between base stations serviced by the same BSC (step 504). In such case, operation proceeds to step 506 wherein a new channel is allocated to the mobile unit for the new base station. Communications are setup so that the mobile unit may communicate with the BSC and continue its packet data session. From step 506, operation proceeds to step 508 where the packet data transmissions intended for the mobile unit are rerouted within the BSC (via a base station interface) to the new base station. From step 508, operation continues to step 410 of FIG. 4.

Handoff to a base station serviced by another BSC is invoked at step 510. From step 510, operation proceeds to step 512 wherein the new BSC and base station resources are allocated to the mobile unit to service the packet data session. With the resources allocated, a new communication path is then established to the mobile unit by the new serving BSC. Then, at step 514, a packet data forwarding path is established from the prior serving BSC to the new serving BSC via the PDN, via the ATM network or via another path. Such packet data forwarding was discussed with reference to FIG. 2 and FIG. 3. Then, at step 516, incoming packet data is forwarded to the mobile unit via the new path. Such forwarding is supported occur until the mobile unit roams to a new BSC or until the packet data session is terminated. From step 516, operation returns to step 410 of FIG. 4.

Handoff to a base station serviced by a new MSC (as compared to the MSC that previously serviced the packet data session) is initiated at step 518. From step 518, operation proceeds to step 520 where new MSC/BSC/base station resources are allocated to the mobile unit to service the packet data session. Then, at step 522, a packet data forwarding path is established from the previous serving BSC to the new serving BSC via an intermediate network (PDN or ATM network). Incoming packet data is then rerouted via the new path to the mobile unit to continue the packet data session. From step 516, operation returns to step 410 of FIG. 4.

When a new packet data forwarding path is established at steps 514 and 522, the packet data forwarding path may pass through more than two BSCs. Such is the case because the mobile unit has roamed across an area serviced by the more than two BSCs. Operating in this manner requires resources of more than two BSCs. Thus, in an alternate operation according to the present invention, the BSCs may operate in cooperation with one another to establish a routing path that only includes the originally serving BSC and a currently serving BSC, such routing path removing the intermediate BSCs from the path.

The invention disclosed herein is susceptible to various modifications and alternative forms. Specific embodiments therefor have been shown by way of example in the drawings and detailed description. It should be understood, however, that the drawings and detailed description thereto are not intended to limit the invention to the particular form disclosed, but on the contrary, the invention is to cover all modifications, equivalents and alternatives falling within the spirit and scope of the present invention as defined by the claims.

## Claims

1. A wireless communication system that services packet data communications between a mobile unit and a packet data network, the wireless communication system comprising:
a mobile switching center;
a plurality of base station controllers coupled to the mobile switching center, each of the base station controllers coupled to the packet data network;
a plurality of base stations, each of which couples to a respective base station controller and supports wireless communications; and
the packet data communications routed between the mobile unit and the packet data network via a base station of the plurality of base stations and a base station controller of the plurality of base station controllers.

2. The wireless communication system of claim 1, wherein a first base station controller that previously serviced wireless communications with the mobile unit forwards packet data communications to a second base station controller that currently services wireless communications with the mobile unit.

3. The wireless communication system of claim 2, wherein the first base station controller forwards the packet data to the second base station controller via a coupled network.

4. The wireless communication system of claim 2, wherein the first base station controller forwards the packet data to the second base station controller via the packet data network.

5. The wireless communication system of claim 2, wherein the first base station controller maintains a packet data network address for the mobile unit.

6. The wireless communication system of claim 1, wherein the wireless communication system operates according to a Code Division Multiple Access Protocol.

7. The wireless communication system of claim 1, wherein the wireless communication system operates according to a Time Division Multiple Access Protocol.

8. A base station controller that couples to a packet data network and that services packet data communications with a mobile unit, the base station controller comprising:
a base station interface that couples the base station controller to a plurality of base stations, at least one of which wirelessly services packet data communications with the mobile unit;
a digital signal processor that couples to the base station interface and that processes the packet data communications;
a processor that couples to the digital signal processor and that processes the packet data communications; and
a packet data network interface coupled to the processor that interfaces with the packet data network and that passes the packet data communications between the base station controller and the packet data network.

9. The base station of claim 8, wherein:
the base station controller supports a Code Division Multiple Access Protocol; and
the digital signal processor supports the InterSystem Link Protocol and the Radio Link Protocol.

10. The base station controller of claim 9, wherein the processor supports the InterSystem Link Protocol, the Point-to-Point Protocol and the Internet Protocol.

11. The base station of claim 8, wherein:
the base station controller supports a Time Division Multiple Access Protocol; and
the digital signal processor supports the General Packet Radio Services Protocol and the Link Layer Control Protocol.

12. The base station controller of claim 11, wherein the processor supports the InterSystem Link Protocol, the Point-to-Point Protocol and the Internet Protocol.

13. The base station controller of claim 8, further comprising a shelf controller that manages the processor, the digital signal processor, the packet data network interface and the base station interface.

14. The base station controller of claim 13, further comprising a back plane that serves to intercouple the shelf controller, the processor, the digital signal processor, the packet data network interface and the base station interface.

15. The base station controller of claim 8, wherein the processor further supports mobility management for the base station controller.

16. In a wireless communication system having a base station controller and a plurality of base stations coupled to the base station controller, a method of operating the wireless communication system to service packet data communications between a mobile unit and a packet data network that is coupled to the base station controller, the method comprising:
establishing a wireless link between a servicing base station and the mobile unit;
allocating a packet data communication path between the base station and the base station controller;
establishing a connection from the base station controller to the packet data network; and
servicing the packet data communications between the mobile unit and the packet data network.

17. The method of claim 16, further comprising continuing to service the packet data communications when the mobile unit roams to another base station serviced by the base station controller.

18. The method of claim 16, further comprising forwarding the packet data communications received by the base station controller to another base station controller that is servicing the mobile unit while it is roaming.

19. The method of claim 18, wherein the another base station controller couples to the packet data network and transmits outgoing packet data communications from the mobile unit to the packet data network.

20. The method of claim 16, further comprising operating the wireless communication system according to a Code Division Multiple Access protocol.
